Europäisches Patentamt

European Patent Office

Office européen des brevets

(19)

(11) Veröffentlichungsnummer: **0 047 390**
**A1**

(12) **EUROPÄISCHE PATENTANMELDUNG**

(21) Anmeldenummer: **81105974.0**

(22) Anmeldetag: **29.07.81**

(51) Int. Cl.³: **A 22 C 13/00**

(30) Priorität: **08.08.80 DE 3030036**

(43) Veröffentlichungstag der Anmeldung: **17.03.82**
**Patentblatt 82/11**

(84) Benannte Vertragsstaaten: **AT BE CH DE FR GB IT LI LU NL SE**

(71) Anmelder: **HOECHST AKTIENGESELLSCHAFT,**
**Postfach 80 03 20, D-6230 Frankfurt/Main 80 (DE)**

(72) Erfinder: **Hammer, Klaus-Dieter, Dr., An der**
**Hasenquelle 25, D-6500 Mainz-Mombach (DE)**
Erfinder: **Heinrich, Wolfgang, Dr., Friedrichstrasse 41,**
**D-7335 Salach (DE)**
Erfinder: **Gerigk, Günter, Dr., Wintersteinstrasse 6,**
**D-6370 Oberursel (DE)**
Erfinder: **Bytzek, Max, Pappelweg 13,**
**D-6200 Wiesbaden-Naurod (DE)**

(54) Schlauchförmige Verpackungshülle, insbesondere künstliche Wursthaut, aus Cellulosehydrat mit wasserdampfundurchlässigem Filmüberzug auf der Aussenseite, Verfahren zu ihrer Herstellung und ihre Verwendung.

㊼ Die schlauchförmige Verpackungshülle, insbesondere künstliche Wursthaut für Koch- und Brühwürste, besteht aus einem Trägerschlauch aus Cellulosehydrat, der 5 bis 12 Gew.-% Wasser und 18 bis 28 Gew.-% Weichmacher enthält. Auf der Außenfläche des Trägerschlauchs befindet sich ein für Wasserdampf undurchlässiger Überzug aus Vinylidenchlorid-Copolymerisat, der mit einer Verankerungsschicht aus wasserunlöslichem wärmegehärtetem Kondensationsprodukt mit dem Trägerschlauch verbunden ist. Auf der Innenseite ist eine haftvermittelnde Schicht aus Kondensationsprodukt zur Verbesserung der Haftung zwischen Trägerschlauch und Wurstmasse vorhanden. Der Trägerschlauch zeigt einen Quellwert (Wasserrückhaltevermögen) von 80 bis 120%. Die Schlauchhülle vergrößert ihre Abmessungen beim Wässern um 2 bis 6% und verkleinert sie beim Brühen bzw. Kochen um 1 bis 3% im Vergleich zum vorherigen gewässerten Zustand. Beschrieben werden ferner Verfahren zur Herstellung der Verpackungshülle.

H O E C H S T   A K T I E N G E S E L L S C H A F T
KALLE   Niederlassung der Hoechst AG

Hoe 80/K 048                           27. Juli 1981
                                       WLJ-Dr.Gt.-gk

Schlauchförmige Verpackungshülle, insbesondere künstliche Wursthaut, aus Cellulosehydrat mit wasserdampfundurchlässigem Filmüberzug auf der Außenseite, Verfahren zu ihrer Herstellung und ihre Verwendung

Die Erfindung bezieht sich auf eine schlauchförmige Verpackungshülle von der im Oberbegriff des Anspruchs 1 genannten Art, auf Verfahren zu ihrer Herstellung und ihre Verwendung.

Bei der Herstellung bekannter schlauchförmiger Verpackungshüllen dieser Art wird der Trägerschlauch aus Cellulosehydrat-Gel hergestellt durch Koagulation von Viskose, beim Trocknen unter erheblicher Längsspannung und in mit Stützluft aufgeblasenem Zustand der Einwirkung von Wärme unterworfen, wobei man die Schrumpfung des Schlauches verhindert.

Künstliche Wursthüllen werden bei ihrer bestimmungsgemäßen Verwendung vor dem Befüllen mit Wurstmasse üblicherweise gewässert, um ihnen die Geschmeidigkeit zu verleihen, die für beschädigungsfreies Befüllen der Hüllen mit Wurstmasse Voraussetzung ist. Zur Wässerung läßt man auf die Hüllen Wasser einer Temperatur von ca. 40 bis 50°C während einer Zeitdauer von ca. 30 min einwirken.

Bei bekannten, gattungsgemäß ausgebildeten künstlichen Wursthüllen, die beispielsweise nach einem in dem US-PS-2,999,757 beschriebenen Verfahren hergestellt sind, bei dem der Schlauch aus Cellulosehydrat-Gel unter Bedingungen getrocknet wird, bei denen sich das Schlauchvolumen vergrößert, verringert sich bei nachfolgender Wässerung die Fläche der Schlauchhülle um ca. 3 bis 6% gegenüber dem vorherigen trockenen Zustand, in dem sie einen relativ geringen Wassergehalt von 5 bis 12% gezeigt hatte. Die gewässerten und dabei geschrumpften Schlauchhüllen werden dann in bekannter Weise mit Wurstmasse gefüllt, indem man diese in die an einem Ende verschlossene Schlauchhülle einpreßt und dann das andere Ende der Hülle verschließt.

Die Würste werden dann mit heißem Wasser von etwa 70 bis 85°C gekocht oder gebrüht; die Einwirkungszeit beträgt etwa 45 bis 90 min, je nach Durchmesser der Wursthülle. Es ist dabei wesentlich, daß der Wurstkern eine Temperatur erreicht, die oberhalb der Koagulationstemperatur von Eiweiß (60 bis 65°C) liegt.

Nach dem Brühvorgang werden die Würste auf Raumtemperatur abgekühlt; dabei verringert sich das Volumen der im Hüllenhohlraum eingeschlossenen Wurstmasse infolge Schrumpfung.

Die bereits beim Wässerungsvorgang geschrumpfte Schlauchhülle schrumpft im Naßzustand beim Abkühlen der Wurst nicht mehr; dies führt dazu, daß sich in der abgekühlten Wurst zwischen Wurstmasse und der sie
umgebenden Hülle unerwünschte Hohlräume ausbilden. Im
Bereich der Hohlräume besteht keine Haftung zwischen
Wurstgut und künstlicher Wursthaut. In die bezeichneten
Hohlräume kann sich aus der Wurstmasse abscheidendes
Fett oder aus dieser austretender Gelee ansammeln,
wodurch die Wurst ein unerwünschtes verkaufshinderliches
Aussehen erhält. Die genannten Effekte können auch dazu
führen, daß bei einer abgeschnittenen, mit ihrer
Schnittfläche nach unten aufgehängten Wurst, die Wurstmasse aus der künstlichen Wursthaut herausrutscht.

Der Erfindung liegt somit die Aufgabe zugrunde, eine als
künstliche Wursthaut verwendbare schlauchförmige Verpackungshülle aus einem Trägerschlauch auf Basis von
Cellulosehydrat, der auf seiner Außenseite eine für
Wasserdampf praktisch undurchlässige Sperrschicht in
Form eines unterbrechungsfreien Filmüberzugs aus synthetischem thermoplastischem Polymerisat und auf seiner
Innenseite eine mit dieser fest verbundene wasserdurchlässige, haftvermittelnde Schicht aus wasserunlöslichem
wärmegehärtetem Kondensationsprodukt besitzt, derart
auszubilden, daß sich die Abmessungen der schlauchförmigen Verpackungshülle nach Wässerung zunächst vergrößern
und nach dem Brühen und Abkühlen durch Schrumpfung verringern. Eine solche schlauchförmige Verpackungshülle
würde bei Verwendung als künstliche Wursthaut nach ihrer
Wässerung, Befüllen mit Wurstmasse und Brühen bzw. Kochen
eng am Füllgut anliegen. Ferner ist es Aufgabe

0047390

HOECHST AKTIENGESELLSCHAFT
KALLE Niederlassung der Hoechst AG

- 4 -

der Erfindung, geeignete Verfahren zur Herstellung dieser Verpackungshülle vorzuschlagen.

Die der Erfindung zugrunde liegende Aufgabe wird gelöst durch die schlauchförmige Verpackungshülle mit den in Anspruch 1 genannten Merkmalen, durch die in den Ansprüchen 4, 10 und 14 genannten Verfahren sowie durch die in Anspruch 18 angegebene Verwendung.

Besondere Ausgestaltungen der Verpackungshülle bzw. der Verfahren sind in den Unteransprüchen angegeben.

Der Trägerschlauch auf Basis von Cellulosehydrat ist bevorzugt faserverstärkt. Die Faserverstärkung besteht vorteilhaft aus einer in die Schlauchwandung eingelagerten Faserbahn, insbesondere bevorzugt einer Papierfaserbahn. Der Trägerschlauch kann auch aus einer mit Cellulosehydrat imprägnierten Papierfaserbahn bestehen, wobei sich auf der Außenseite ein faserfreier Cellulosehydratüberzug befindet.

Die Bezeichnung Trägerschlauch auf Basis von Cellulosehydrat umfaßt auch Trägerschläuche aus chemisch modifiziertem Cellulosehydrat, die vorzugsweise faserverstärkt sind.

Chemisch modifiziertes Cellulosehydrat ist dadurch charakterisiert, daß Cellulosehydratmoleküle durch polyfunktionelle organische chemische Verbindungen miteinander vernetzt sind. Die chemische Vernetzung der Cellulosehydratmoleküle erfolgt durch ein chemisches Vernetzungsmittel, das wenigstens zwei reaktionsfähige N-Methylolgruppen im Molekül aufweist, die befähigt sind, mit reaktionsfähigen Gruppen von Cellulosehydratmolekülen zu reagieren. Besonders geeignet sind cyclische Harnstoffverbindungen mit wenigstens zwei N-Methylolgruppen im Molekül, beispielsweise folgende cyclische Harnstoffderivate, die in der US-PS-3,937,672 als chemische Verbindungen zur Vernetzung von Cellulosehydratmolekülen beschrieben sind: Dimethylol-äthylenharnstoff (1,3-Dimethylolimidazolidon-2), Dimethyloldihydroxy-äthylenharnstoff (1,3-Dimethylol-4,5-dihydroxy-imidazolidon-2), Dimethylol-äthyl-triazinon, 3,5-Dimethylol-3,5-diaza-tetrahydropyron-4, Tetramethylol-acetylen-diharnstoff, Dimethylol-propylenharnstoff, Dimethylol-hydroxy-propylenharnstoff, Dimethylol-tetramethyl-propylenharnstoff und 1-Glykol-monomethyläther-2-dimethylolcarbamat. Das chemisch modifizierte Cellulosehydrat enthält bezeichnete, bevorzugt polyfunktionelle chemische Verbindungen in einer Menge im Bereich von 0,5 bis 5 Gew.-%, beispielsweise 2 Gew.-%, bezogen auf das Cellulosehydratgewicht.

Das Verfahren zur chemischen Modifizierung von Cellulosehydrat mit Hilfe der genannten chemischen Verbindungen ist ebenfalls in der genannten US-Patentschrift beschrieben.

Das den Trägerschlauch des Erzeugnisses bildende Cellulosehydrat bzw. chemisch modifizierte Cellulosehydrat

hat einen Quellwert (Wasserrückhaltevermögen) im
Bereich von 80 bis 120%, vorteilhaft 80 bis 115%, insbesondere 80 bis 105%, ganz besonders vorteilhaft 90
bis 100%. Für das Eintreten des erfindungsgemäß
angestrebten Erfolges ist es wesentlich, daß der Quellwert des den Trägerschlauch bildenden Cellulosehydrats
kleiner als 120%, insbesondere nicht größer als 115%
ist.

Der Quellwert gibt diejenige Menge Wasser bzw. wäßrige
Lösung in Gewichtsprozent an, bezogen auf das Gewicht des
den Trägerschlauch bildenden Cellulosehydrats bzw. chemisch modifizierten Cellulosehydrats, die von dem
Material des Trägerschlauchs gebunden werden können.

Der Quellwert wird ermittelt nach DIN 53 814, beschrieben in "Färberei- und textiltechnische Untersuchungen",
A. Agster, S. 450, Springer-Verlag, 1967, 10. Auflage.

Infolge des niedrigen Quellwertes hat der Trägerschlauch in wässerungsnassem Zustand hohe Formstabilität. Das ihn bildende Cellulosehydrat bzw. chemisch
modifizierte Cellulosehydrat ist durch verfestigte
Molekularstruktur charakterisiert. Diese Eigenschaften
sind Folge eines im Vergleich mit bekannten gattungsgemäßen Schläuchen hohen Anteils an kristallinen
Bereichen und gegebenenfalls Folge chemischer Verknüpfung von Cellulosehydratmolekülen. Sie sind Voraussetzung dafür, daß das Erzeugnis die erfindungsgewollten,
in Anspruch 1 angegebenen Eigenschaften hat; bei bestimmungsgemäßer Verwendung des Erzeugnisses als künstliche Wursthaut für Brühwürste und Kochwürste führen dessen Eigenschaften zu dem angestrebten Erfolg. Unter Brühwürste sind beispielsweise zu verstehen: Jagdwurst, Bierschinken, Fleischwurst, Mortadella, Lyoner, Schinkenwurst, Gelbwurst und Geflügelwurst. Kochwürste sind beispielsweise Leberwürste und Blutwurstsorten wie Preßsack oder Thüringer.

Der Trägerschlauch hat zweckmäßigerweise eine Wanddicke, die einem Flächengewicht im Bereich von 80 bis 110 $g/m^2$ entspricht.

Die Verpackungshülle vergrößert bei Wässerung ihre Fläche bzw. ihr Volumen durch Ausdehnung in Richtung ihrer Längsachse und radialer Richtung derart, daß sie bzw. es im Bereich von 2 bis 6%, insbesondere 3 bis 5% größer ist als im ungewässerten Zustand. Unter Wässerung ist zu verstehen, daß man die Verpackungshülle der Einwirkung von Wasser einer Temperatur im Bereich von etwa 40 bis 50°C während einer Zeitdauer von ca. 30 min aussetzt, beispielsweise dadurch, daß man sie in eine mit Wasser gefüllte Wanne einlegt.

Durch Brühen oder Kochen der gewässerten und mit Wurstmasse gefüllten Verpackungshülle mit Wasser einer Temperatur von 70 bis 85°C verringert sich die Fläche der Verpackungshülle und damit ihre Abmessungen bzw. ihr Volumen durch Schrumpfung. Die Verpackungshülle besitzt nach dem Brühen eine Oberfläche bzw. ein Volumen, die

HOECHST AKTIENGESELLSCHAFT
KALLE Niederlassung der Hoechst AG

- 8 -

bzw. das im Bereich von 1,5 bis 4% kleiner ist als die Fläche bzw. das Volumen der Verpackungshülle nach ihrer Wässerung und beim Füllen mit Wurstmasse.

Zur Ermittlung der Dimensionsverringerung der Verpackungshülle während des Brühens bzw. Kochens wird die Verpackungshülle während einer Zeitdauer von ca. 30 min gebrüht bzw. gekocht, wobei man das wie zuvor angegeben zunächst bei 40 bis 50°C gewässerte Erzeugnis in noch nassem Zustand in eine Wanne einlegt, die mit Wasser einer Temperatur von 85°C gefüllt ist. Danach werden die Abmessungen der Verpackungshülle bestimmt.

Zur Ermittlung der Dimensionszunahme der Verpackungshülle nach der Wässerung bei 40 bis 50°C in nassem Zustand im Vergleich mit den Abmessungen vor der Wässerung geht man von einer Verpackungshülle bestimmter Länge und bestimmten Durchmessers aus, beispielsweise von einem Schlauchstück mit 10 cm Länge und einem Durchmesser von 9 cm, und schneidet das Schlauchstück längsaxial auf. Das erhaltene rechteckige Flächengebilde wird in einer Wanne mit Wasser von beispielsweise 50°C 30 min lang gewässert. Danach wird das Flächengebilde der Flüssigkeit entnommen, seine flächige Abmessung in nassem Zustand ermittelt und mit seinen Abmessungen vor der Wässerung verglichen.

Das gewässerte Probestück wird dann ohne vorherige Trocknung in nassem Zustand der Einwirkung von Wasser einer Temperatur von 85°C während einer Zeitdauer von 30 min in einer Wanne unterworfen. Danach werden die Abmessungen des Flächengebildes in noch nassem Zustand ermittelt und mit denen eines nur gewässerten Flächengebildes von gleichem Format in nassem Zustand verglichen.

Als nasser Zustand des Flächengebildes wird der bezeichnet, in dem sich das jeweilige Probestück unmittelbar nach Beendigung der Einwirkung von Wasser und nach Abkühlen auf Raumtemperatur befindet, ohne daß es einer Trocknung unterzogen wurde.

Die Ermittlung der Abmessungen des gebrühten bzw. gekochten Flächengebildes in noch nassem Zustand schließt aus, daß sich die Abmessungen des Flächengebildes infolge Wasserverlust beim Trocknen verringern.

Der Trägerschlauch der erfindungsgemäßen Verpackungshülle enthält einen Feuchtigkeitsanteil von insgesamt 30 bis 40 Gew.-%, bezogen auf ihr Gesamtgewicht, wobei sie etwa 5 bis 12 Gew.-% Wasser sowie 18 bis 28 Gew.-% bekannte, zur Weichmachung von Cellulosehydrat befähigte chemische Verbindung in Form von Polyolen, insbesondere Glykol, Polyglykol oder Glycerin enthält, jeweils bezogen auf das Gesamtgewicht der Verpackungshülle.

Auf der Innenseite des Trägerschlauchs der Verpackungshülle befindet sich eine mit dieser fest verbundene wasserdurchlässige, haftvermittelnde Schicht aus wasserunlöslichem chemischem Kondensationsprodukt, das durch Wärmehärtung wasserlöslicher Vorkondensate gebildet ist. Als geeignete Kondensationsprodukte werden beispielsweise verwendet:

1) Kondensationsprodukte aus Eiweiß, beispielsweise Casein, mit Formaldehyd mit einem Anteil von Formaldehyd im Bereich von 5 bis 20 Gew.-%, bevorzugt 6 bis 8 Gew.-%, bezogen auf Eiweißgewicht;

2) Kondensationsprodukte aus Harnstoff und Formaldehyd;

3) Kondensationsprodukte aus Melamin und Formaldehyd;

4) Kondensationsprodukte aus Epichlorhydrin mit Polyamin bzw. Polyamin-Polyamid.

Haftvermittelnde Schichten aus Kondensationsprodukten aus Epichlorhydrin mit Polyamid insbesondere mit Polyamin-Polyamid sind bevorzugt.

Die Dicke der haftvermittelnden Schicht auf der Innenseite des Trägerschlauchs ist im Vergleich mit der des Trägerschlauchs sowie der des Filmüberzugs aus wasserdampfundurchlässigem Vinylidenchlorid-Copolymerisat auf der äußeren Oberfläche vernachlässigbar gering und leistet keinen Beitrag zur Formfestigkeit der Verpackungshülle. Die haftvermittelnde Schicht hat vorteilhaft eine Dicke entsprechend einem Flächengewicht im Bereich von 10 bis 100 mg, bevorzugt 15 bis 50 mg, besonders 35 mg, wärmegehärteter wasserunlöslicher Kondensate nach 1) bis 4) pro $m^2$ Substratoberfläche.

Cellulosehydratschläuche mit haftvermittelnder Schicht aus den unter 1) bis 4) genannten chemischen Kondensationsprodukten sind in der US-PS-3,378,379 beschrieben. Die Ausbildung der Schicht kann beispielsweise in der Weise erfolgen, wie sie in der US-PS-3,378,379 beschrieben ist.

Bei einem besonders ausgebildeten Erzeugnis mit faserverstärktem Trägerschlauch, d.h. einem Trägerschlauch aus einem mit Cellulosehydrat imprägnierten Faserschlauch mit faserfreiem Cellulosehydratüberzug auf seiner Außenseite, grenzt die haftvermittelnde Schicht aus den genannten Kondensationsprodukten unmittelbar an den Faserschlauch an.

Die Außenseite der Verpackungshülle bildet ein unterbrechungsfrei ausgebildeter, für Wasser und Wasserdampf praktisch undurchlässiger Filmüberzug aus thermoplastischem Vinylidenchlorid-Copolymerisat.

Bevorzugt enthält der für Wasser und Wasserdampf praktisch undurchlässige Filmüberzug aus Vinylidenchlorid-Copolymerisat einen überwiegenden Anteil an copolymerisiertem Vinylidenchlorid, wobei das Vinylidenchlorid-Copolymerisat insbesondere einen Anteil im Bereich von 70 bis 92 Gew.-% an copolymerisiertem Vinylidenchlorid und einen Anteil von 8 bis 30 Gew.-%,, jeweils bezogen auf das Gesamtgewicht des Copolymerisats, an einem Gemisch aus copolymerisiertem Acrylnitril, Methacrylsäuremethylester und Itaconsäure umfaßt. Ganz besonders bevorzugt besteht der Filmüberzug aus einem in der DE-AS 28 32 926 beschriebenen Copolymerisat, das zu 90 bis 92 Gew.-% aus Vinylidenchlorid, zu 1 bis 1,5 Gew.-% aus Itaconsäure, zu 1,5 bis 3,5 Gew.-% aus Methacrylsäuremethylester und zu 5,5 bis 7 Gew.-% aus Acrylnitril als Comonomeren besteht, wobei sich die gewichtsprozentualen Angaben jeweils auf das Gesamtgewicht des Copolymerisats beziehen. Die 0,9 gewichtsprozentige Lösung dieses Copolymerisats zeigt in einer Mischung aus Tetrahydrofuran und Toluol im Verhältnis von 70 : 30, gemessen bei 23°C, eine relative Viskosität von 1,04, die 3 gewichtsprozentige Lösung eine relative Viskosität von 2,8.

Der Filmüberzug bevorzugter Ausbildung besitzt eine Dicke entsprechend einem Flächengewicht im Bereich zwischen 3 und 10 g/m². Der bei 4°C gemessene E-Modul-Wert des Filmüberzugs in gealtertem Zustand der Schlauchhülle ist höchstens doppelt so groß, wie der der ungealterten mit einem Wert von ca. 1200 N/mm². Auch nach Alterung und anschließender Umfangsdehnung der Schlauchhülle im Bereich von 10 bis 35% ist sie praktisch undurchlässig gegenüber dem Durchtritt von Wasserdampf.

Zwischen dem Filmüberzug und der Außenseite des Trägerschlauchs ist eine Verankerungsschicht aus chemischem Material angeordnet, die an der Oberfläche des Trägerschlauchs fest haftet und deren zweite Oberfläche in fester Verbindung mit dem Filmüberzug steht.

Die Verankerungsschicht besteht aus wasserunlöslichem, wärmegehärtetem chemischem Kondensationsprodukt, ausgewählt aus einer Gruppe von Kondensationsprodukten, deren chemischer Aufbau dem chemischen Aufbau derjenigen Kondensationsprodukte nach 2) bis 4) entspricht, die wie vorstehend angegeben zur Ausbildung von haftvermittelnden Schichten auf der Innenseite des Erzeugnisses geeignet sind.

Die Verankerungsschicht hat eine Dicke, die im Vergleich zu der Dicke des Trägerschlauchs und der Dicke des wasserdampfundurchlässigen Filmüberzugs auf der Außenseite der Verpackungshülle vernachlässigbar gering ist und keinen Beitrag zur Formsteifigkeit der Verpackungshülle leistet, vorteilhaft eine solche entsprechend einem Flächengewicht im Bereich von 40 bis 200 mg des wie vorstehend angegeben aufgebauten chemischen Kondensationsproduktes pro $m^2$ Substratoberfläche.

Die Erfindung umfaßt die folgenden drei Varianten eines Verfahrens zur Herstellung der Verpackungshülle.

Verfahrensvariante I
Ausgangsprodukt für die Durchführung der ersten Variante des erfindungsgemäßen Verfahrens ist ein Schlauch aus Cellulosehydrat-Gel, welcher hergestellt aus Viskose durch Koagulation noch keinem Trocknungsvorgang

HOECHST AKTIENGESELLSCHAFT
KALLE Niederlassung der Hoechst AG

- 14 -

unterworfen wurde. Die Wand des Schlauchs enthält eine dem Quellwert im Bereich von 280 bis 320%, beispielsweise 300%, des den Schlauch bildenden Cellulosehydrat-Gels entsprechende Menge wäßriger Lösung einer chemischen Verbindung, die zur Weichmachung von Cellulosehydrat befähigt ist.

Die wäßrige Lösung enthält den Weichmacher in einer Menge im Bereich von 8 bis 12 Gew.-%, vorteilhaft 10 Gew.-% , bezogen auf ihr Gesamtgewicht.

Im Rahmen der vorliegenden Erfindungsbeschreibung umfaßt die Bezeichnung Weichmacher für Cellulosehydrat aliphatische Polyhydroxyverbindungen, insbesondere Polyole, ausgewählt aus einer Gruppe umfassend Glycerin, Glykol sowie Polyglykol, beispielsweise Polyglykol 2000.

Der Schlauch aus Cellulosehydrat-Gel ist beispielsweise faserverstärkt, er besitzt vorteilhaft eine in seine Wandung eingelagerte Papierfaserbahn.

Genannte Schläuche per se sowie deren Herstellung sind Stand der Technik.

Die Außenwand des Trägerschlauchs umfaßt eine Imprägnierung, die

a) aus einem wasserlöslichen Vorkondensat aus Harnstoff und Formaldehyd oder

b) aus einem wasserlöslichen Vorkondensat aus Melamin und Formaldehyd oder

c) aus einem wasserlöslichen Vorkondensat aus Epichlorhydrin und Polyamin oder Polyamin-Polyamid besteht.

Die genannten Vorkondensate sind durch Einwirkung von
Wärme hitzehärtbar, wobei sie in wasserunlösliche Kondensationsprodukte überführt werden.

Bei der beispielhaften Verfahrensdurchführung befindet
sich auf der Außenseite des Schlauchs aus Cellulosehydrat-Gel vorteilhaft wasserlösliches Vorkondensat aus
Epichlorhydrin und Polyamin-Polyamid.

Wasserlösliche Epichlorhydrin-Polyamin-Polyamid-
Vorkondensate sind in der US-PS-2,926,154 und
US-PS-3,378,379, wasserlösliche Harnstoff-Formaldehyd-
Vorkondensate in der US-PS-2,616,874 und wasserlösliche
Melamin-Formaldehyd-Vorkondensate in der
US-PS-2,796,362 und US-PS-2,345,543 beschrieben.

Die Imprägnierung an der Außenseite des Schlauches aus
Cellulosehydrat-Gel mit den angegebenen chemischen Verbindungen erfolgt beispielsweise dadurch, daß man die
Schlauchaußenseite mit einer wäßrigen Flüssigkeit
besprüht, die eines der genannten Vorkondensate enthält
oder den Schlauch beispielsweise fortlaufend durch eine
Wanne führt, die mit wäßriger Imprägnierflüssigkeit gefüllt ist. Beispielsweise besteht die Flüssigkeit aus einer wäßrigen Lösung, die 10 bis 20 g/l, beispielsweise 15 g/l, Epichlorhydrin-Polyamin-Polyamid-Vorkondensat gelöst enthält. Die Beaufschlagung der Außenseite des Schlauchs mit der Imprägnierflüssigkeit erfolgt in der Weise, daß man auf die Schlauchoberfläche eine solche Menge der bezeichneten Flüssigkeit aufbringt, daß deren gelöster Anteil in einer Menge im Bereich von 10 bis 100 $mg/m^2$, beispielsweise 80 $mg/m^2$, auf der Schlauchoberfläche vorhanden ist.

Der Schlauch aus Cellulosehydrat-Gel, der beispielsweise einen Durchmesser von 90 mm aufweist, wird zur Verfahrensdurchführung fortlaufend in mit Stützluft gefülltem Zustand einer ersten Wärmebeaufschlagung unterworfen, wobei man auf ihn keine längsweise wirkende Zugkraft ausüben läßt, so daß der jeweils wärmebeaufschlagte integrale Schlauchabschnitt in der Lage ist, radial sowie längsweise zu schrumpfen.

Der Druck der Stützluft im Schlauchhohlraum im Bereich der Wärmeeinwirkungszone hat einen Wert bzw. wird auf einen Wert eingestellt, daß der Schlauch während der Wärmeeinwirkung in der Lage ist, radial und längsweise zu schrumpfen.

Der jeweils die Wärmeeinwirkungszone durchlaufende Teil des Schlauchs unterliegt anfangs der Einwirkung von Wärme einer Temperatur im Bereich von 70 bis 90°C und an ihrem Ende einer Temperatur im Bereich von 100 bis 130°C.

HOECHST AKTIENGESELLSCHAFT
KALLE Niederlassung der Hoechst AG

- 17 -

Die gesamte Zeitdauer, während der auf den Schlauch die
Wärme einwirkt, beträgt bevorzugt 1,5 bis 3 min.

Die längsaxial zugspannungsfreie Führung des Schlauchs
durch die erste Wärmeeinwirkungszone erfolgt in der
Weise, daß seine Fortbewegungsgeschwindigkeit innerhalb
der Wärmeeinwirkungszone verzögert wird. Vorzugsweise
ist die Fortbewegungsgeschwindigkeit bei Austritt des
Schlauchs aus der Wärmeeinwirkungszone um ca. 2 bis
10%, insbesondere 3 bis 6%, kleiner als bei Eintritt in
diese Zone. Beispielsweise beträgt die Fortbewegungsgeschwindigkeit des Schlauchs bei Eintritt in die
Wärmeeinwirkungszone 10 m/min, während der Schlauch bei
Austritt aus dieser eine Fortbewegungsgeschwindigkeit
von 9,5 m/min hat.

Nach Austritt des Schlauchs aus der ersten Wärmeeinwirkungszone beträgt der Wassergehalt in seiner Wandung
beispielsweise 8 bis 10 Gew.-%, und sein Anteil an
Weichmachern liegt im Bereich von 18 bis 24 Gew.-%,
jeweils bezogen auf das Schlauchgesamtgewicht. Der
Schlauch hat nach der ersten Wärmebeaufschlagung einen
Quellwert im Bereich zwischen 120% bis 140%, beispielsweise einen solchen von 130%.

Die erste Wärmebeaufschlagung unter den genannten Bedingungen kann beispielsweise wie folgt realisiert werden:

Der mit Vorkondensat auf seiner Außenseite und gegebenenfalls Innenseite imprägnierte Schlauch aus Cellulosehydrat-Gel wird fortlaufend durch einen geraden Heiztunnel mit horizontal verlaufender Längsachse geführt. Der Heiztunnel kann beispielsweise auch mit Infrarotstrahlung emittierenden elektrischen Heizelementen ausgerüstet sein. Die angegebene Verzögerung der Fortbewegungsgeschwindigkeit des Schlauchs erfolgt im Heiztunnel beispielsweise dadurch, daß man den Schlauch bei Eintritt in den Heiztunnel über seine gesamte Breite flach zusammenpreßt und ihn dabei zugleich in Richtung zum Ende des Heiztunnels fortbewegt. Das Flachlegen erfolgt z.B. dadurch, daß man den Schlauch durch den Quetschspalt eines in Fortbewegungrichtung des Schlauchs ersten, am Anfang des Heiztunnels angeordneten Quetschwalzenpaares führt, dessen Walzen drehbar sowie antreibbar ausgebildet sind. Die Walzen werden beispielsweise durch Motoren angetrieben.

Im Bereich des Quetschspaltes des ersten Quetschwalzenpaares stehen die Außenseiten des flach zusammengepreßten Schlauchs in kraftschlüssiger Verbindung mit den Umfangsflächen der angetriebenen Walze des ersten Quetschwalzenpaares. Die längsweise Förderung des Schlauchs erfolgt durch die kraftschlüssige Verbindung seiner Oberflächen mit den Umfangsflächen der rotierenden Walzen des ersten Quetschwalzenpaares.

Der aus dem Quetschspalt des ersten Quetschwalzenpaares austretende Schlauch wird durch den Heiztunnel und dann durch den Quetschspalt eines am Ende des Heiztunnels angeordneten zweiten Quetschwalzenpaares mit angetriebenen Walzen geführt. Im Bereich des Quetschspaltes des zweiten Quetschwalzenpaares wird der Schlauch erneut entlang einer schmalen Zone flach zusammengepreßt. Im Bereich des Quetschspalts des zweiten Quetschwalzenpaares befindet sich die Außenseite des Schlauchs in kraftschlüssigem Kontakt mit den Umfangsflächen der jeweils mit gleicher Umfangsgeschwindigkeit rotierenden Walzen des zweiten Quetschwalzenpaares, wobei der Schlauch aus dem Heiztunnel gefördert wird.

Die Umfangsgeschwindigkeit der angetriebenen Walzen des zweiten Quetschwalzenpaares ist im Bereich von 2 bis 10%, bevorzugt 3 bis 6%, beispielsweise 4%, kleiner als die Umfangsgeschwindigkeit der angetriebenen Walzen des ersten Quetschwalzenpaares.

Die Umfangsgeschwindigkeit der angetriebenen Walzen des ersten Quetschwalzenpaares beträgt beispielsweise 10 m/min, während die Umfangsgeschwindigkeit der Walzen des zweiten Quetschwalzenpaares 9,5 m/min beträgt. Die jeweilige Geschwindigkeit, mit der der Schlauch von den Quetschwalzenpaaren gefördert wird, entspricht den Umfangsgeschwindigkeiten der Walzen der jeweiligen Walzenpaare.

Der im Bereich zwischen dem Quetschspalt des ersten Quetschwalzenpaares und dem des zweiten Quetschwalzenpaares befindliche Schlauchteil ist mit Stützluft gefüllt.

Das erste Quetschwalzenpaar am Eingang des Heiztunnels ist zu dem zweiten Quetschwalzenpaar am Ausgang des
Heiztunnels vorzugsweise derart angeordnet, daß die
Längsachse der durch die Walzenspalte der Quetschwalzenpaare legbare gemeinsame Walzenspaltebene mit der
geraden Längsachse des Trockentunnels praktisch übereinstimmt. Die Quetschwalzenpaare sind dabei vorteilhaft in der Weise angeordnet, daß sich der Quetschspalt
des ersten Quetschwalzenpaares unmittelbar am Anfang
und der Quetschspalt des zweiten Quetschwalzenpaares
unmittelbar am Ende des Heiztunnels befindet.

Der Bereich zwischen dem Quetschspalt des ersten
Quetschwalzenpaares und dem des zweiten Quetschwalzenpaares ist diejenige Zone, innerhalb welcher der
Schlauch aus Cellulosehydrat-Gel erstmalig mit Wärme
beaufschlagt wird.

Der unter den angegebenen Bedingungen erstmals mit
Wärme beaufschlagte und getrocknete Schlauch wird dann
mit Wasser durchfeuchtet.
Der Schlauch enthält in seiner Wand nach der Befeuchtung einen Flüssigkeitsanteil im Bereich von 108 bis
126 Gew.-%, beispielsweise 117 Gew.-%, bezogen auf sein
Gesamtgewicht, wobei 8 bis 12 Gew.-%, beispielsweise 10
Gew.-%, der Flüssigkeitsmenge in der Schlauchwand aus
Weichmacher für Cellulosehydrat, beispielsweise
Glycerin, besteht.

Der Anteil an Flüssigkeit in der Schlauchwand entspricht dem Quellwert des aus Cellulosehydrat bestehenden Schlauchs.

Sofern noch nicht geschehen wird nun die Innenseite des Schlauchs mit Vorkondensat enthaltender Flüssigkeit beschichtet, die bezüglich ihrer Zusammensetzung der entspricht, mit der die Außenseite des Schlauchs aus Cellulosehydrat-Gel bereits präpariert wurde.
Die Innenbeschichtung des Schlauchs mit der Flüssigkeit kann beispielsweise mit der in der US-PS-3,378,379 beschriebenen Innenbeschichtungstechnologie durchgeführt werden.

Der wie angegeben befeuchtete und gegebenenfalls auf seiner Innenseite mit Vorkondensat enthaltender Flüssigkeit behandelte Schlauch wird dann einer zweiten Wärmeeinwirkung unterworfen und dabei getrocknet.

Bei der zweiten Wärmeeinwirkung wird der Schlauch längsaxial fortlaufend mit im wesentlichen gleichbleibender Geschwindigkeit durch eine Wärmeeinwirkungszone hindurchgeführt. Die Schlauchfortbewegungsgeschwindigkeit ist somit bei Eintritt in die Wärmeeinwirkungszone und bei Austritt aus dieser Zone gleich groß oder ist bei Austritt nur geringfügig größer, höchstens 2%, beispielsweise 1%, größer als bei Eintritt in diese Zone.

Jeder Schlauchteil ist dabei während einer Gesamtdauer im Bereich von 1,5 bis 3 min der Einwirkung von Wärme ausgesetzt.

Die Temperatur bei der zweiten Wärmeeinwirkung nimmt in der Wärmeeinwirkungszone in Schlauchfortbewegungsrichtung zu und beträgt an deren Anfang etwa 70 bis 90°C, beispielsweise 80°C, an deren Ende etwa 100 bis 130°C, beispielsweise 120°C. Der Schlauch hat nach der zweiten Beaufschlagung mit Wärme einen Quellwert im Bereich von etwa 90 bis 115%, beispielsweise 95%.

Die zweite Wärmebeaufschlagung und Trocknung des Schlauchs wird demnach unter Einhaltung der vorstehend angegebenen Temperaturen und der Wärmeeinwirkungsdauer durchgeführt, die denen entsprechen, die bei der Durchführung der ersten Trocknung zur Anwendung gelangen. Bei der zweiten Trocknung sind jedoch die Umfangsgeschwindigkeiten der Walzen des ersten Quetschwalzenpaares gleich den Umfangsgeschwindigkeiten der Walzen des zweiten Quetschwalzenpaares. Die Umfangsgeschwindigkeiten der Walzen der Quetschwalzenpaare beträgt beispielsweise 10 m/min. Die Umfangsgeschwindigkeit der Walzen des zweiten Quetschwalzenpaares kann aber auch geringfügig, höchstens 2%, beispielsweise 1%, größer sein als die der Walzen des ersten Quetschwalzenpaares. Die Fortbewegungsgeschwindigkeit des Schlauchs bei Austritt aus dem Quetschspalt der Quetschwalzenpaare entspricht dabei der Umfangsgeschwindigkeit der Quetschwalzen und ist bei Austritt aus dem Walzenspalt des zweiten Quetschwalzenpaares gleich oder höchstens 2%, beispielsweise 1%, größer als bei Austritt aus dem Spalt des ersten Quetschwalzenpaares.

Auf die Außenseite des durch die zweite Wärmeeinwirkung getrockneten Schlauchs wird dann ein für Wasser und Wasserdampf praktisch undurchlässiger unterbrechungsfrei ausgebildeter Filmüberzug aus Vinylidenchlorid-Copolymerisat ausgebildet. Zu diesem Zweck bringt man auf der Außenseite des bezeichneten Schlauches eine Schicht aus Flüssigkeit auf, die das Copolymerisat enthält, beispielsweise das oben beschriebene Vinylidenchlorid-Copolymerisat mit überwiegendem Anteil an Vinylidenchlorid.

Die Flüssigkeit enthält das Copolymerisat in einer Menge im Bereich von 18 bis 22 Gew.-%, bezogen auf ihr Gesamtgewicht.

Die Beaufschlagung der Außenseite mit der angegebenen Flüssigkeit erfolgt beispielsweise in der Weise, wie sie in der DE-AS 28 32 926 beschrieben ist, indem man den Schlauch flachliegend in einer mit bezeichneter Flüssigkeit gefüllten Wanne hindurchführt und nach Austritt des Schlauchs aus der Flüssigkeit die flüssige Schicht auf seiner Oberfläche durch eine Rakeleinrichtung auf eine gewünschte Stärke reduziert und zugleich vergleichmäßigt.

Die Konzentration der Beschichtungsflüssigkeit und die Schichtdicke der flüssigen Schicht auf der Schlauchaußenseite vor Eintritt des Schlauchs in den Trockner wird derart gewählt, daß sich nach Vertreiben des Lösungsmittels aus der flüssigen Schicht auf der Schlauchaußenseite ein unterbrechungsfreier Filmüberzug

HOECHST AKTIENGESELLSCHAFT
KALLE Niederlassung der Hoechst AG

- 24 -

aus bezeichnetem Polymerisat bildet, dessen Dicke einem Flächengewicht im Bereich von 5 bis 12 $g/m^2$, beispielsweise 10 $g/m^2$, Substratoberfläche entspricht.

Der wie angegeben auf seiner Außenseite mit der bezeichneten flüssigen Schicht versehene Schlauch wird dann in einem dritten Trockenschritt getrocknet, indem man ihn mit Wärme beaufschlagt, beispielsweise dadurch, daß man ihn durch einen Trockenkanal hindurchführt, der beispielsweise mit Heißluft betrieben ist, die eine Temperatur im Bereich von 90 bis 120°C, beispielsweise 110°C, besitzt.

Der getrocknete Schlauch hat einen Wassergehalt im Bereich von 5 bis 12 Gew.-%, beispielsweise 10 Gew.-%, bezogen auf sein Gesamtgewicht.

Der Schlauch wird gegebenenfalls mit Wasser befeuchtet, um einen bestimmten Endwassergehalt in der Schlauchwand herzustellen, der 5 bis 12 Gew.-%, beispielsweise 10 Gew.-%, bezogen auf das Gesamtgewicht des Schlauchs beträgt.
Zur Befeuchtung des Schlauchs mit Wasser wird er beispielsweise fortlaufend durch eine mit Wasser gefüllte Wanne geführt, wobei die Flüssigkeit in Kontakt mit der Schlauchinnenseite kommt.

Das Schrumpfverhalten der Verpackungshülle bei ihrer bestimmungsgemäßen Verwendung als Wursthülle nach Wässerung ist im wesentlichen Folge der besonderen Führung des Schlauchs durch die Wärmeeinwirkungszone
bei der ersten Wärmebeaufschlagung des Schlauchs.
Der erfindungsgemäß angestrebte niedrige Quellwert der
Verpackungshülle ergibt sich aus den kombinierten
besonderen thermischen Bedingungen, unter denen die
erste und zweite Wärmebeaufschlagung durchgeführt wird.

Verfahrensvariante II

Die zweite Variante des erfindungsgemäßen Verfahrens
wird beispielhaft nachfolgend erläutert.

Man geht aus von einem beispielsweise faserverstärkten
Schlauch, der aus Cellulosehydrat-Gel besteht, der
zuvor noch keiner Wärmebehandlung unterworfen wurde und
einen Quellwert im Bereich von 280 bis 320 Gew.-%,
beispielsweise 300 Gew.-%, besitzt. In der Schlauchwand
ist eine dem Quellwert des Cellulosehydrat-Gels
entsprechende Menge wäßriger Lösung vorhanden, welche
Weichmacher für Cellulosehydrat, beispielsweise Glycerin, sowie eine wenigstens zwei N-Methylol-Gruppen im
Molekül aufweisende organische chemische Verbindung
enthält, ausgewählt aus einer Gruppe chemischer Verbindungen umfassend cyclische Harnstoffverbindungen mit
zwei N-Methylol-Gruppen im Molekül, beispielsweise
Dimethyloldihydroxyäthylen-Harnstoff (1,3-Dimethylol-
4,5-dihydroxy-imidazolinon-2).

Die wäßrige Lösung enthält als primären Weichmacher
Glycerin in einer Menge im Bereich von 8 bis 12 Gew.-%,
beispielsweise 10 Gew.-%. Die wäßrige Lösung enthält
die zur chemischen Verknüpfung von Cellulosehydrat befähigten bifunktionellen Verbindungen mit wenigstens zwei N-Methylolgruppen im Molekül, ausgewählt aus der Gruppe der angegebenen chemischen Verbindungen, in einer Menge im Bereich von 0,5 bis 5 Gew.-%, beispielsweise 2,5 Gew.-%, bezogen auf das Gewicht der wäßrigen Lösung. Die wie vorstehend angegeben bifunktionellen chemischen Verbindungen sind in der US-PS-3,937,672 beschrieben.

Der Schlauch enthält die bifunktionellen wenigstens zwei N-Methylolgruppen im Molekül aufweisenden chemischen Verbindungen in einer Menge von beispielsweise 1 bis 3 Gew.-%, bezogen auf das Gesamtgewicht des Cellulosehydrats im Schlauch.

Zu dieser Vorstufe des Verfahrensproduktes gelangt man, indem man beispielsweise auf den bevorzugt faserverstärkten Schlauch aus Cellulosehydrat-Gel, hergestellt aus Viskose durch Koagulation, welcher noch nicht getrocknet worden war, eine wäßrige Flüssigkeit zur Einwirkung bringt, die im Bereich von 5 bis 12 Gew.-%, beispielsweise 10 Gew.-%, bezogen auf ihr Gesamtgewicht zur Weichmachung von Cellulosehydrat befähigter Verbindung, beispielsweise Glycerin enthält. Diese Lösung enthält zusätzlich organisch-chemische Verbindung mit wenigstens zwei N-Methylolgruppen im Molekül, beispielsweise Dimethylol-dihydroxyäthylen-Harnstoff in einer Menge im Bereich von 0,5 bis 5 Gew.-%, insbesondere 1,5 bis 3 Gew.-%, bezogen auf das Gesamtgewicht der Lösung.

Zur Durchführung dieser Weichmacherbehandlung wird der Schlauch aus Cellulosehydrat-Gel fortlaufend durch eine mit der Flüssigkeit gefüllte Wanne geführt.

Die Außen- und Innenseite des wie vorstehend behandelten Schlauchs wird dann jeweils mit einer ein wasserlösliches Vorkondensat enthaltenden Flüssigkeit behandelt, die in ihrer Zusammensetzung bei der ersten Verfahrensvariante beschrieben wurde. Die Behandlung erfolgt beispielsweise wie bei der ersten Verfahrensvariante angegeben.

Der Schlauch aus Cellulosehydrat-Gel wird dann der Einwirkung von Wärme unterworfen und getrocknet, wobei die gleichen Bedingungen, insbesondere bezüglich Temperatur, Schlauchgeschwindigkeit und Wärmeeinwirkungszeit wie bei der ersten Wärmebeaufschlagung nach der ersten Verfahrensvariante einzuhalten sind.

Der Schlauch hat bereits nach dieser Wärmebeaufschlagung einen Quellwert im Bereich von 90 bis 115%, beispielsweise 100%.

Auf der Oberfläche des getrockneten Schlauchs wird dann analog zur Verfahrensvariante I ein für Wasserdampf praktisch undurchlässiger Filmüberzug aus Vinylidenchlorid-Copolymerisat aufgebracht.

Die dabei zur Trocknung des Überzugs auf dem Schlauch zur Einwirkung gebrachte Wärme verändert den Quellwert des Schlauchs, den dieser nach der ersten Einwirkung von Wärme besitzt, nicht mehr.

Das bei der zweiten Verfahrensvariante zur Ausbilung des Filmüberzugs auf der Schlauchaußenseite verwendete Copolymerisat entspricht dem Copolymerisat der ersten Verfahrensvariante.

Gegebenenfalls wird der auf seiner Außenseite mit dem wasserdampfundurchlässigen Filmüberzug versehene Schlauch in der Weise angefeuchtet, wie dies bei der Erläuterung der ersten Verfahrensvariante angegeben ist.

Das Schrumpfverhalten der Verpackungshülle bei ihrer bestimmungsgemäßen Verwendung als Wursthülle, nach Wässerung, Füllen mit Wurstmasse und Heißwasserbehandlung ist Folge der besonderen Führung des Schlauchs durch die Wärmeeinwirkungszone unter Schrumpfung des Schlauchs zulassenden Bedingungen.

Der erfindungsgemäß angestrebte niedrige Quellwert des Verfahrenserzeugnisses ist Folge des chemischen Aufbaus des Trägerschlauchs. Bei der Wärmebeaufschlagung werden Cellulosehydratmoleküle des Schlauchs durch die bifunktionelle chemische Verbindung in der Schlauchwand chemisch verknüpft, wodurch eine zusätzliche Erniedrigung des Quellwerts des Schlauchs erreicht wird.

Verfahrensvariante III

Die Durchführung der dritten Variante des erfindungs-

HOECHST AKTIENGESELLSCHAFT
KALLE Niederlassung der Hoechst AG

- 29 -

gemäßen Verfahrens unterscheidet sich von der Durchführung der zweiten Variante des Verfahrens in folgenden Punkten:

1. Der Ausgangsschlauch entspricht dem Schlauch aus Cellulosehydrat-Gel der Verfahrensvariante I, d.h., er ist nicht chemisch modifiziert. Seine Außen- und Innenfläche ist mit einer Weichmacher enthaltenden Flüssigkeit und mit einer Vorkondensat enthaltenden Flüssigkeit behandelt.

2. Die auf den Schlauch am Anfang der Wärmeeinwirkungszone einwirkende Wärme hat eine Temperatur im Bereich von 90 bis 110°C, bevorzugt etwa 100°C, und am Ende eine Temperatur im Bereich von 140 bis 160°C, bevorzugt etwa 150°C; der Schlauch unterliegt während einer Gesamtzeit im Bereich von 3 bis 8 min, beispielsweise 6 min, der Einwirkung von Wärme. Die Wärmeeinwirkung erfolgt analog zu der Verfahrensvariante I unter Schrumpfung des Schlauchs zulassenden Bedingungen.

Der Schlauch hat nach der ersten Wärmeeinwirkung einen Quellwert im Bereich von 90 bis 115%, beispielsweise 100%; die zweite Wärmebeaufschlagung zur Trocknung des wasserdampfundurchlässigen Überzugs auf der Schlauchaußenseite verändert den Quellwert des Schlauchs, den dieser nach der ersten Wärmebeaufschlagung besitzt, nicht mehr.

Das Schrumpfverhalten der nach der dritten Verfahrensvariante hergestellten Verpackungshülle bei bestimmungsgemäßer Verwendung als Wursthülle, nach Wässerung,
Füllen mit Wurstmase und Heißwasserbehandlung ist Folge
der besonderen Führung des Schlauchs durch die
Wärmeeinwirkungszone.
Der angestrebte niedrige Quellwert des Verfahrenserzeugnisses ist das Ergebnis der besonderen ersten
Wärmebeaufschlagung.

Bei den drei Verfahrensvarianten zur Herstellung der
Verpackungshülle ist es für die
erste Verfahrensvariante wesentlich, daß der Ausgangsschlauch unter Schrumpfung zulassenden Bedingungen vor
Ausbildung des für Wasserdampf praktisch undurchlässigen
Filmüberzugs auf seiner Außenseite zunächst einer ersten
thermischen Behandlung der bezeichneten Wärmeeinwirkungsdauer und Wärmeeinwirkungstemperatur unterzogen wird,
danach befeuchtet und anschließend unter praktisch
zugspannungsfreien Bedingungen einer zweiten Wärmebeaufschlagung unter den angegebenen Bedingungen unterworfen
wird, wobei durch jede der beiden Wärmebeaufschlagungsschritte der Quellwert des den Schlauch bildenden Cellulosehydrats jeweils von einem Anfangswert auf einen
diesem gegenüber geringeren Endwert reduziert wird. Der
Anfangsquellwert des Schlauchs zu Beginn des zweiten
Wärmeeinwirkungsschritts entspricht dem Quellwert des Schlauchs nach der ersten Wärmebeaufschlagung.
Für die erfindungsgemäß gewollten Eigenschaften des
Verfahrenserzeugnisses ist es bei der Durchführung der
zweiten Verfahrensvariante wesentlich, daß der Ausgangsschlauch aus chemisch modifiziertem Cellulosehydrat
besteht und der Schlauch vor Ausbildung des für Wasserdampf praktisch undurchlässigen Filmüberzugs auf seiner
Außenseite einer einzigen Wärmebeaufschlagung unter
Schrumpfung zulassenden Bedingungen bei den genannten
Temperaturen und Wärmeeinwirkungszeiten unterworfen wird.
Für das Eintreten des erfindungsgewollten Effektes ist es
bei der Durchführung der dritten Verfahrensvariante
wesentlich, daß der Ausgangsschlauch vor Ausbildung des
für Wasserdampf praktisch undurchlässigen Filmüberzugs
auf seiner Außenseite einer einzigen intensiven Wärmebeaufschlagung unter Schrumpfung zulassenden Bedingungen
unterworfen wird.

-----

Patentansprüche

1. Schlauchförmige Verpackungshülle, insbesondere künstliche Wursthaut, bestehend aus einem Trägerschlauch auf Basis von Cellulosehydrat, der in seiner Wandung 5 bis 12 Gew.-% Wasser, sowie 18 bis 28 Gew.-% zur Weichmachung von Cellulosehydrat befähigter chemischer Substanz, jeweils bezogen auf das Gesamtgewicht des Trägerschlauchs, enthält, mit einem ihre Außenseite bildenden für Wasser und Wasserdampf im wesentlichen undurchlässigen Filmüberzug aus Vinylidenchlorid-Copolymerisat, der mit dem Trägerschlauch durch eine Verankerungsschicht aus wasserunlöslichem wärmegehärtetem Kondensationsprodukt verbunden ist, bei der der Trägerschlauch auf seiner Innenseite eine an dieser festhaftende, wasserdurchlässige haftvermittelnde Schicht aus wasserunlöslichem, wärmegehärtetem Kondensationsprodukt besitzt, dadurch gekennzeichnet, daß der Trägerschlauch der Verpackungshülle einen Quellwert im Bereich zwischen 80 und 120% besitzt, die schlauchförmige Verpackungshülle nach Wässerung bei 40 bis 50°C über eine Zeitdauer von etwa 30 min. und anschließendem Abkühlen auf Raumtemperatur im nassen Zustand Abmessungen hat, die um 2 bis 6% größer sind als die Abmessungen der Verpackungshülle vor der Wässerung, und die gewässerte schlauchförmige Verpackungshülle nach Beaufschlagung mit Wasser bei einer Brüh- bzw. Kochtemperatur von 85°C über etwa 30 min. und Abkühlung auf Raumtemperatur im nassen Zustand um 1 bis 3% geringere Abmessungen besitzt als die gewässerte schlauchförmige Hülle in nassem Zustand.

2. Schlauchförmige Verpackungshülle nach Anspruch 1, dadurch gekennzeichnet, daß der Trägerschlauch aus durch organische chemische Verbindung mit wenigstens zwei N-Methylol-Gruppen im Molekül chemisch modifiziertem Cellulosehydrat besteht.

3. Schlauchförmige Verpackungshülle nach Anspruch 1 oder 2, dadurch gekennzeichnet, daß das Kondensationsprodukt auf der Innenseite des Trägerschlauchs aus Eiweiß/ Formaldehyd, Harnstoff/Formaldehyd, Melamin/Formaldehyd, Epichlorhydrin/Polyamin sowie vorzugsweise Epichlorhydrin/ Polyamin-Polyamid besteht.

4. Verfahren zur Herstellung der schlauchförmigen Verpackungshülle nach einem der Ansprüche 1 oder 3, bei dem man die Außen- und gegebenenfalls die Innenseite des Weichmacher enthaltenden Trägerschlauches aus Cellulosehydrat-Gel, hergestellt durch Koagulation von Viskose, der zuvor noch keiner Wärmebehandlung unterworfen wurde, mit wasserlöslichem Vorkondenat enthaltender Flüssigkeit behandelt, den Schlauch einer ersten Wärmeeinwirkung unter Trocknen und Ausbildung eines Überzugs aus wasserunlöslichem Kondensationsprodukt unterwirft, auf seiner Außenseite eine Schicht aus einer Flüssigkeit aufbringt, die ein Vinylidenchlorid-Copolymerisat enthält, durch erneute Einwirkung von Wärme den flüchtigen Anteil der Schicht vertreibt und zugleich einen im wesentlichen für Wasser und Wasserdampf undurchlässigen, unterbrechungsfreien Filmüberzug ausbildet, dadurch gekennzeichnet, daß man den mit wasserlösliches Vorkondensat enthaltender Flüssigkeit behandelten Schlauch aus Cellulosehydrat-Gel fortlaufend längsaxial durch eine erste
Wärmeeinwirkungszone führt und dabei trocknet, wobei die
einwirkende Temperatur am Anfang der Wärmeeinwirkungszone im Bereich von 70 bis 90°C und am Ende im Bereich
von 100 bis 130°C liegt, den Schlauch auf seiner Innenseite mit das genannte Vorkondensat enthaltender
Flüssigkeit behandelt, sofern noch nicht vor der ersten
Trocknung geschehen, den Schlauch fortlaufend durch eine
zweite Wärmeeinwirkungszone führt und dabei trocknet,
wobei die Schlauchfortbewegungsgeschwindigkeit bei
Austritt aus der zweiten Wärmeeinwirkungszone gleich
oder höchstens 2% größer ist als bei Eintritt in diese
Zone, und dann auf der Außenseite des Schlauchs in an
sich bekannter Weise den für Wasserdampf praktisch
undurchlässigen Filmüberzug ausbildet.

5. Verfahren nach Anspruch 4, dadurch gekennzeichnet,
daß die Fortbewegungsgeschwindigkeit des Schlauchs bei
Austritt aus der ersten Wärmeeinwirkungszone um 2 bis
10% kleiner ist als die bei Eintritt in diese Zone.

6. Verfahren nach Anspruch 4 oder 5, dadurch gekennzeichnet, daß die erste Wärmeeinwirkung in einem Heiztunnel erfolgt, an dessen Anfang sich ein erstes
Quetschwalzenpaar mit angetriebenen Walzen und an dessen
Ende sich ein zweites Quetschwalzenpaar mit angetriebenen Walzen befindet, wobei man den Schlauch zwischen den
beiden Quetschwalzenpaaren mit Stützgas gefüllt führt
und wobei die Umfangsgeschwindigkeit der ersten Quetschwalzen um 2 bis 10% größer ist als die der zweiten Quetschwalzen.

7. Verfahren nach einem der Ansprüche 4 bis 6, dadurch gekennzeichnet, daß der Schlauch der ersten Wärmeeinwirkung während einer Zeitdauer im Bereich von 1,5 bis 3 min unterliegt.

8. Verfahren nach einem der Ansprüche 4 bis 7, dadurch gekennzeichnet, daß am Anfang der zweiten Wärmeeinwirkungszone eine Temperatur im Bereich von 70 bis 90°C und am Ende im Bereich von 100 bis 130°C vorhanden ist.

9. Verfahren nach einem der Ansprüche 4 bis 8, dadurch gekennzeichnet, daß der Schlauch der zweiten Wärmeeinwirkung während einer Zeitdauer im Bereich von 1,5 bis 3 min unterliegt.

10. Verfahren zur Herstellung der schlauchförmigen Verpackungshülle nach einem der Ansprüche 1 oder 3, bei dem man die Außen- und Innenseite des Weichmacher enthaltenden Trägerschlauches aus Cellulosehydrat-Gel, hergestellt durch Koagulation von Viskose, der zuvor noch keiner Wärmebehandlung unterworfen wurde, mit wasserlöslichem Vorkondensat enthaltender Flüssigkeit behandelt, den Schlauch einer ersten Wärmeeinwirkung unter Trocknen und Ausbildung eines wasserunlöslichen Überzugs aus Kondensationsprodukt unterwirft, auf seiner Außenseite eine Schicht aus einer Flüssigkeit aufbringt, die ein Vinylidenchlorid-Copolymerisat enthält, durch erneute Einwirkung von Wärme den flüchtigen Anteil der Schicht vertreibt und zugleich einen für Wasser und Wasserdampf im wesentlichen undurchlässigen, unterbrechungsfreien Filmüberzug ausbildet, dadurch gekennzeichnet, daß man die erste Wärmeeinwirkung unter Schrumpfung des Schlauchs zulassenden Bedingungen durchführt, wobei am Anfang der ersten Wärmeeinwirkungszone eine Temperatur im Bereich von 90 bis 110°C und am Ende eine Temperatur im Bereich von 140 bis 160°C vorhanden ist.

11. Verfahren nach Anspruch 10, dadurch gekennzeichnet, daß die längsaxiale Fortbewegungsgeschwindigkeit des Schlauchs bei Austritt aus der ersten Wärmebeaufschlagungszone um 2 bis 10% kleiner ist als bei Eintritt in diese Zone.

12. Verfahren nach einem der Ansprüche 10 oder 11, dadurch gekennzeichnet, daß die erste Wärmeeinwirkung in einem Heiztunnel erfolgt, wobei sich an dessen Anfang ein erstes Quetschwalzenpaar mit angetriebenen Walzen und an dessen Ende ein zweites Quetschwalzenpaar mit angetriebenen Walzen befindet, wobei die ersten Quetschwalzen eine Umfangsgeschwindigkeit besitzen, die im Bereich von 2 bis 10% größer ist als die der zweiten Quetschwalzen und wobei der Schlauch mit Stützgas gefüllt zwischen den beiden Quetschwalzenpaaren geführt wird.

13. Verfahren nach einem der Ansprüche 10 bis 12, dadurch gekennzeichnet, daß der Schlauch der ersten Wärmeeinwirkung während einer Zeitdauer im Bereich von 3 bis
8 min unterliegt.

14. Verfahren zur Herstellung der schlauchförmigen
Verpackungshülle nach einem der Ansprüche 1 bis 3, bei
dem man einen Schlauch aus Cellulosehydrat-Gel,
hergestellt durch Koagulation von Viskose, der zuvor
noch keiner Wärmebehandlung unterzogen wurde und der in
seiner Wandung zur chemischen Weichmachung von Cellulosehydrat befähigte chemische Verbindung sowie ein
wenigstens zwei N-Methylol-Gruppen im Molekül aufweisendes chemisches Mittel zur Vernetzung der Cellulosehydrat-Moleküle enthält und dessen äußere und innere
Oberfläche jeweils mit wasserlöslichem Vorkondensat
enthaltender Flüssigkeit behandelt ist, unter erster
Wärmeeinwirkung trocknet, wobei das Vorkondensat in ein
wasserunlösliches Kondensationsprodukt übergeführt wird
und die Cellulosehydrat-Moleküle vernetzt werden, auf
der Außenseite des Schlauches eine Schicht aus Flüssigkeit aufbringt, die Vinylidenchlorid-Copolymerisat
enthält und durch erneute Wärmeeinwirkung den flüchtigen
Anteil der Schicht unter Ausbildung eines unterbrechungsfreien, für Wasser und Wasserdampf im wesentlichen
undurchlässigen Filmüberzugs vertreibt, dadurch gekennzeichnet, daß man die erste Wärmeeinwirkung vor der Ausbildung des Filmüberzugs unter Schrumpfung des Schlauchs
zulassenden Bedingungen durchführt, wobei zu Beginn
dieser Wärmebehandlung eine Temperatur im Bereich von 70
bis 90°C und am Ende im Bereich von 100 bis 130°C
vorhanden ist.

15. Verfahren nach Anspruch 14, dadurch gekennzeichnet, daß die längsaxiale Fortbewegungsgeschwindigkeit des Schlauchs bei Austritt aus der ersten Wärmebeaufschlagungszone um 2 bis 10% kleiner ist als bei Eintritt in diese Zone.

16. Verfahren nach Anspruch 14 oder 15, dadurch gekennzeichnet, daß der Schlauch der ersten Einwirkung von Wärme während einer Zeitdauer im Bereich von 1,5 bis 3 min unterliegt.

17. Verfahren nach einem der Ansprüche 14 bis 16, dadurch gekennzeichnet, daß die erste Wärmeeinwirkung auf den Schlauch innerhalb eines Heiztunnels erfolgt, wobei sich an dessen Anfang ein erstes Quetschwalzenpaar mit angetriebenen Walzen und an dessen Ende ein zweites Quetschwalzenpaar mit angetriebenen Walzen befindet, wobei ferner der Schlauch mit Stützgas aufgeblasen fortlaufend durch den Heiztunnel und die Walzenpaare geführt wird und wobei die Umfangsgeschwindigkeit der zweiten Quetschwalzen 2 bis 10% kleiner ist als die der ersten Quetschwalzen.

18. Verwendung der schlauchförmigen Verpackungshülle nach einem der Ansprüche 1 bis 17 als künstliche Wursthaut für Koch- und Brühwürste.

-----

Europäisches
Patentamt

**EUROPÄISCHER RECHERCHENBERICHT**

0047390

Nummer der Anmeldung

EP 81 10 5974

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | DE - A - 2 437 781 (W. FALLER)  <br> * Ansprüche 1,4,7 *  <br><br> -- | 1 |
| A | DE - B - 1 024 322 (KALLE)  <br> * Anspruch 1 *  <br><br> -- | 1 |
| A | LU - A - 56 977 (KALLE)  <br> * Anspruch 1 *  <br><br> -- | 1 |
| A | FR - A - 2 305 290 (HOECHST)  <br> * Anspruch 1 *  <br><br> ---- | 1 |

**KLASSIFIKATION DER ANMELDUNG (Int. Cl.³)**

A 22 C 13/00

**RECHERCHIERTE SACHGEBIETE (Int. Cl.³)**

A 22 C 13/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 11-12-1981 | PERMENTIER |

EPA form 1503.1   06.78